# FASCICULE DE BREVET EUROPEEN

(11) **EP 0 836 709 B1**
(45) Date de publication et mention de la délivrance du brevet: **22.01.2003**
(21) Numéro de dépôt: 96924912.7
(22) Date de dépôt: 02.07.1996
(51) Int. Cl.: G01P 13/02

(54) **PROCEDE D'INDICATION ET INDICATEUR LUMINEUX DE LA DIRECTION ET DE LA VITESSE DU VENT ET DU NIVEAU DE POLLUTION DE L'AIR**
ANZEIGEVERFAHREN UND BELEUCHTETE ANZEIGEVORRICHTUNG FÜR WINDRICHTUNG-UND GESCHWINDIGKEIT, SOWIE DES GRADES DER LUFTVERSCHMUTZUNG
METHOD AND LIGHT UNIT FOR INDICATING WIND DIRECTION, WIND VELOCITY AND AN AIR POLLUTION LEVEL

(30) Priorité: 03.07.1995 FR 9507980
(43) Date de publication de la demande: 22.04.1998
(73) Titulaire: Cosyns, Jean-Pierre, 75019 Paris (FR)
(72) Inventeur: Cosyns, Jean-Pierre, 75019 Paris (FR)
(74) Mandataire: Lejet, Christian
(86) Numéro de dépôt international: FR9601020
(87) Numéro de publication internationale: WO97002492

(56) Documents cités:
- EP-A- 0 365 047
- DE-C- 901 634
- FR-A- 2 170 964
- FR-A- 2 172 485
- US-A- 1 644 547

## Description

L'invention concerne les indicateurs lumineux de la direction et de la vitesse du vent et du niveau de pollution de l'air.

Il est connu, par le brevet français 2 172 485, de transformer les déplacements angulaires d'une girouette en variation d'intensité d'un courant électrique, afin de pouvoir visualiser à distance, à l'aide d'un ampèremètre, la direction du vent. De telles installations sont utilisées en météorologie, et tout particulièrement dans les tours de contrôle d'aérodrome.

Il est connu aussi, par le brevet français 2 170 964, de disposer en cercle des lampes témoins de visualisation de la position d'une girouette-anémomètre et de la force du vent. Pour ce faire, des cames magnétiques sont montées sur l'axe de la girouette et commandent des contacteurs de mise sous tension des lampes témoins ; l'éclairement des lampes pouvant être modulé en fonction de la vitesse du vent.

On connaît aussi, enfin, par la demande de brevet internationale PCT WO 94 14150, une colonne lumineuse dont la paroi extérieure est destinée à servir de support d'affichage et comporte, à son sommet, un capteur solaire qui s'oriente en fonction de la position du soleil.

On connait également du document DE-C-901 634 un dispositif dans lequel la rose des vents est divisée en plusieurs secteurs. Chaque secteur est affecté d'une couleur déterminée et le secteur correspondant à la direction instantanée du vent est illuminé par cette couleur. La vitesse du vent est, en outre, indiquée en m/s ou en Beaufort.

Par ailleurs, un dispositif indiquant la pollution de l'air est, par exemple, décrit dans le document EP-A-0 365 047.

Toutefois, aucun de ces dispositifs ne permet de donner, à distance et dans l'obscurité, une indication simple et directe, mais néanmoins suffisante pour les besoins les plus courants, de la direction et de la vitesse du vent et du niveau de pollution de l'air, sans aucun préjudice esthétique.

La présente invention a pour but de remédier à ces inconvénients. Cette invention, telle qu'elle est caractérisée dans les revendications résout le problème consistant à définir un procédé et à réaliser un dispositif permettant de transformer des indications mécaniques de la direction et de la vitesse du vent, en indications lumineuses différenciées selon les secteurs de la rose des vents et sélectionnées en fonction de la vitesse du vent et des indications de capteurs au niveau de pollution de l'air.

Le procédé d'indication lumineuse à distance de la direction et de la vitesse du vent, ainsi que du niveau de pollution de l'air, selon l'invention, mettant en oeuvre une girouette, un anémomètre et des capteurs, se caractérise en ce qu'il consiste à :
a) diviser la rose des vents en quatre secteurs égaux correspondant chacun à un angle de 90°, dont la bissectrice est confondue respectivement avec les directions Nord, Est, Sud et Ouest, c'est-à-dire couvrant chacun, dans le sens horaire, les secteurs Nord-Ouest à Nord-Est, Nord-Est à Sud-Est, Sud-Est à Sud-Ouest et Sud-Ouest à Nord-Ouest,
b) affecter à chaque secteur délimité à l'étape précédente a) une couleur prédéterminée, choisie arbitrairement pour constituer un code de couleurs,
c) choisir des sources lumineuses colorées selon le code de couleurs défini à l'étape précédente b) en nombre égal par couleur,
d) juxtaposer les sources lumineuses colorées réunies à l'étape précédente c), en les alternant régulièrement, en respectant l'ordre défini à l'étape a),
e) relier individuellement chaque source lumineuse colorée à une alimentation électrique de spécification appropriée, avec interposition d'un sélecteur asservi au déplacement angulaire de la girouette, de façon que seules les sources lumineuses de même couleur correspondant aux secteurs définis à l'étape d), soient éclairées lorsque la girouette est orientée selon l'un des points cardinaux, plein Nord, plein Est, plein Sud ou plein Ouest, mais ne soient éclairées que sur une partie (D1) seulement de la distance (D) couverte par la totalité des sources lumineuses colorées juxtaposées, lorsque la girouette forme un angle avec la direction du point cardinal concerné ; l'indication lumineuse de la direction du vent étant alors précisée par l'éclairage de la partie restante (D2) de la distance couverte par les sources lumineuses de couleur correspondant à celle affectée au secteur du côté duquel la girouette est décalée angulairement par rapport au point cardinal considéré, la distance D2=D-D1 étant alors proportionnelle à la valeur de l'angle balayé par la girouette,
f) adjoindre, aux sources lumineuses colorées servant à indiquer la direction du vent, telles que définies ci-dessus, une série de sources lumineuses d'une couleur choisie arbitrairement et répartie selon l'échelle de Beaufort. Chaque source lumineuse correspond à un échelon de la dite échelle,
g) relier individuellement les sources lumineuses destinées à indiquer la force du vent, telles que définies à l'étape f) ci-dessus, à une alimentation électrique de spécification appropriée, avec interposition d'un sélecteur asservi à la vitesse de rotation de l'anémomètre, n'assurant l'éclairage que des sources lumineuses correspondant aux graduations de l'échelle de Beaufort couvertes par la force du vent,
h) utiliser des sources lumineuses colorées, activées séparément selon le niveau de pollution de l'air mesuré par des capteurs dédiés, en affectant une couleur distincte à chaque niveau de pollution prédéterminé.

Préférentiellement le code de couleurs choisi pour indiquer la direction du vent serait : Bleu, Jaune, Vert et Rouge. La correspondance avec les points cardinaux pourrait être : Nord=Bleu; Est=Jaune; Sud=Vert; Ouest = Rouge.

Les couleurs, correspondant à chaque niveau de pollution prédéterminé, sont, dans l'ordre croissant des niveaux, le vert, l'orange et le rouge.

L'indicateur lumineux de la direction et de la vitesse du vent selon la revendication 4 permettant la mise en oeuvre du procédé selon l'invention, se caractérise principalement en ce que les indicateurs lumineux colorés sont constitués de tubes luminescents de quatre couleurs différentes, correspondant chacune à un secteur particulier de la rose des vents, juxtaposés et alternés régulièrement pour couvrir une surface suffisante à l'interprétation à distance de la direction du vent, la dimension mesurée dans un plan perpendiculaire aux dits tubes correspond à la distance D, déterminée à l'étape e) du procédé ; en ce que la mise sous tension unitaire ou collective des tubes luminescents colorés indiquant la direction du vent est obtenue par l'intermédiaire d'un sélecteur asservi au déplacement angulaire de la girouette et en ce que la mise sous tension unitaire des sources lumineuses, représentant les échelons de l'échelle de Beaufort, est obtenue par l'intermédiaire d'un sélecteur asservi à l'anémomètre.

Selon un mode particulier de réalisation de l'indicateur, les tubes luminescents sont des tubes au néon.

Plus particulièrement, les tubes luminescents sont circulaires et sont fixés autour d'un mât, supportant une girouette-anémomètre, derrière une paroi translucide.

Selon un mode de réalisation de l'invention, les tubes luminescents colorés indiquant la direction du vent et les sources lumineuses représentant les échelons de l'échelle, d'une part, et le niveau de pollution de l'air, d'autre part, sont fixés sur un panneau disposé contre la façade d'un édifice, au sommet duquel est disposée la girouette-anémomètre, ou une girouette et un anémomètre séparés.

Selon un mode de réalisation électromécanique, le sélecteur, assurant la mise sous tension unitaire ou/et collective des tubes luminescents colorés, est constitué d'une couronne isolante, à la périphérie de laquelle sont fixés, à espace régulier, des plots conducteurs, dont le nombre correspond à celui de la totalité des dits tubes luminescents colorés et auxquels sont reliées individuellement l'une des bornes de mise sous tension des tubes, en regroupant ceux ayant la même couleur dans le même secteur en respectant leur ordre sur l'indicateur et le code de couleurs défini aux étapes a) à d) du procédé ; sur ces plots, repose un patin conducteur asservi au déplacement de la girouette, ledit patin, couvrant un angle de 90°, étant disposé symétriquement par rapport au plan de symétrie longitudinal de la girouette et étant relié à l'une des bornes de la prise d'alimentation électrique, alors que l'autre borne est reliée directement et collectivement à la seconde borne de mise sous tension des tubes. Ainsi, par ce moyen, tous les tubes de la même couleur, et uniquement eux, sont mis sous tension lorsque la girouette est orientée en direction de l'un des points cardinaux, toute la hauteur de l'indicateur est éclairée de la même couleur, alors que des tubes de l'une des couleurs voisines sont mis progressivement sous tension en remplacement de ceux progressivement mis hors tension, lorsque le patin glisse vers le point cardinal vers lequel s'oriente la girouette dès qu'un décalage par rapport au point cardinal concerné apparaît.

Selon un mode particulier de réalisation, l'extrémité de l'empennage de la girouette comporte une source lumineuse visualisant l'axe longitudinal XX de la dite girouette et permettant de situer, en combinaison avec les indications colorées de la direction du vent, la situation géographique d'un point par rapport à la girouette.

Accessoirement, l'empennage de la girouette est muni de trois sources lumineuses, de couleur respectivement verte, orange et rouge, activées séparément selon le niveau de pollution mesuré par des capteurs dédiés, selon un code pré-établi faisant correspondre les couleurs verte, orange et rouge respectivement à des niveaux de qualité de l'air bon, moyen et médiocre.

Selon un mode de réalisation, les sources lumineuses sont constituées de sphères lumineuses de couleur bleue, incrustées dans l'empennage de la girouette et cerclées, de part et d'autre de l'empennage, par un tube au néon circulaire de couleur appropriée.

Les avantages obtenus, grâce à cette invention, consistent essentiellement en ceci que les indications approximatives de la direction et de la vitesse du vent, ainsi que du niveau de pollution de l'air, suffisantes pour les besoins courants, sont ainsi mises en permanence à la disposition du public, de jour comme de nuit, en recourant à des moyens simples et, par conséquent, très fiables.

D'autres caractéristiques et avantages apparaîtront dans la description qui va suivre d'un mode de réalisation plat et d'un mode de réalisation circulaire de l'invention, donnés à titre d'exemple non limitatif au regard des dessins annexés sur lesquels :
- la figure 1 représente un panneau revêtu de tubes au néon rectilignes réalisés en quatre couleurs et de deux rangées de lampes, séparées par les tubes au néon,
- la figure 2 représente un schéma du sélecteur de tubes luminescents colorés, avec répartition des couleurs selon les secteurs de la rose des vents,
- la figure 3 représente un mât cylindrique, supportant une girouette-anémomètre, entouré de tubes au néon superposés, situés derrière une paroi protectrice translucide, au pied duquel est disposée une série de lampes indiquant la vitesse du vent.

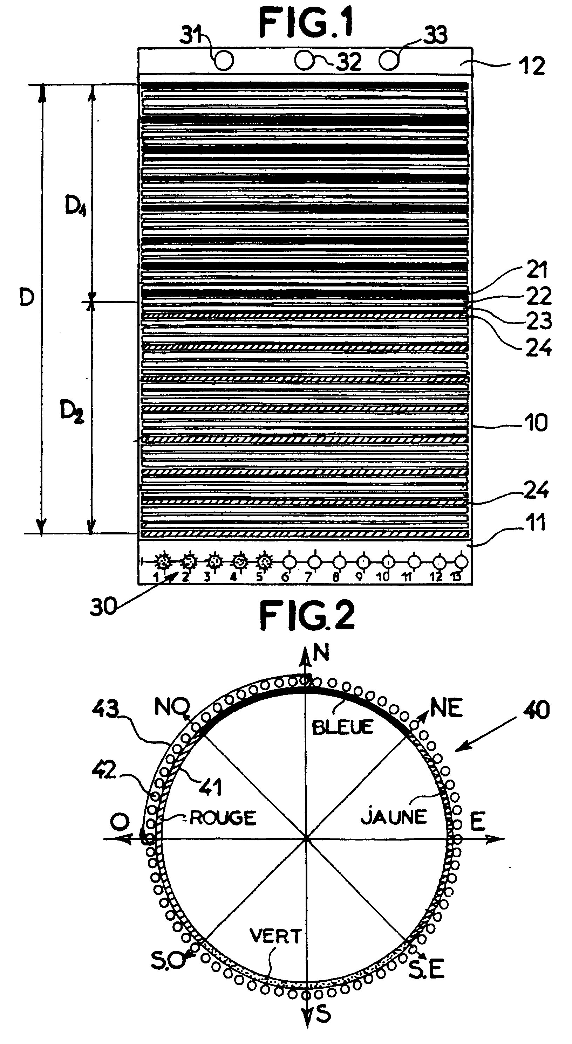

La figure 1 représente un indicateur lumineux de la direction et de la vitesse du vent, constitué d'un panneau **10,** supportant des tubes au néon de couleur bleue, rouge, jaune et verte, juxtaposés et alternés, dont certains des tubes de couleur bleue **21** et de couleur rouge **24** sont éclairés, alors que les tubes de couleur jaune **22** et verte **23** sont restés hors tension. Une première série de lampes colorées **30** est disposée dans la partie inférieure **11** du panneau **10.** Les cinq premières lampes de ladite série étant éclairées, pour indiquer que la vitesse du vent correspond à l'échelon **5** de l'échelle de Beaufort. Une seconde série de trois sources lumineuses **31, 32, 33,** colorées respectivement en vert, orange et rouge, correspondant, chacune, à un niveau de pollution 1, 2 ou 3, est disposée à la partie supérieure **12** du panneau **10**

La figure **2** est une représentation schématique du sélecteur **40** de tubes au néon colorés **21, 22, 23, 24,** représentés à la figure 1, le patin **43,** d'interconnexion des plots **42,** entourant la couronne isolante **41,** entraîné par la girouette non représentée sur cette figure, est dans la position Nord-Ouest (N.O.), ce qui fait que, dans cette position du patin **43,** seule la moitié des tubes de couleur rouge sont mis sous tension et, par conséquent, éclairés. Il en résulte que, par le truchement d'une plaque translucide recouvrant la totalité des tubes au néon, deux zones colorées, respectivement en bleu et en rouge, sont superposées pour donner, grâce au code de couleurs, une indication visuelle de la direction d'où souffle le vent.

On comprend que, lorsque le vent souffle du secteur Nord, Nord-Ouest, les trois-quarts des tubes de couleur bleue sont éclairés, alors que seulement un quart des tubes de couleur rouge sont éclairés.

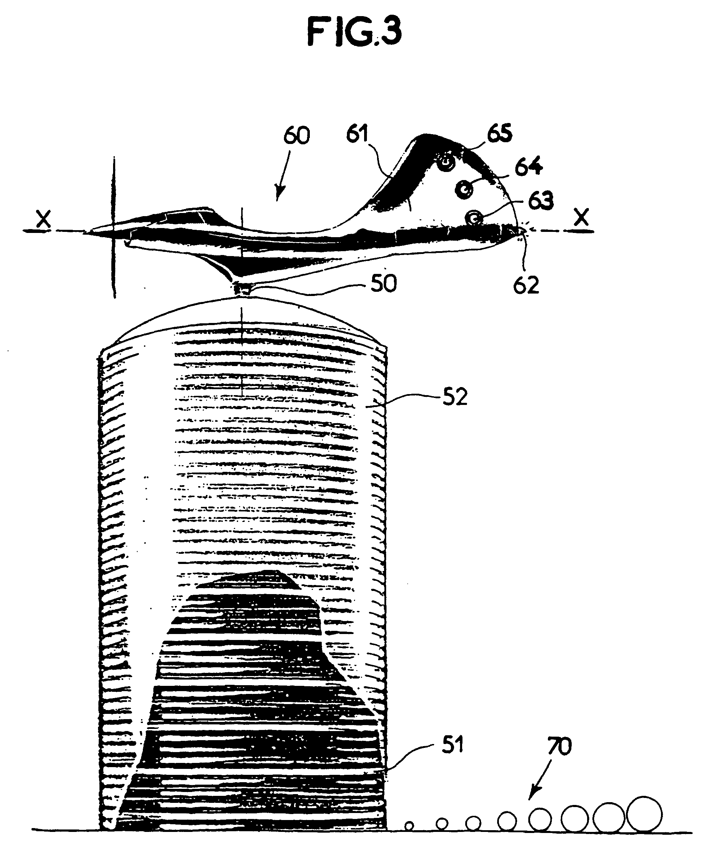

En se rapportant maintenant à la figure 3, représentant un mât vertical **50,** entouré de tubes au néon colorés **51** disposés derrière une paroi cylindrique translucide **52,** surmonté d'une girouette-anémomètre **60,** on remarque que, selon l'orientation de la girouette **60** et la vitesse du vent, la paroi cylindrique translucide se colore de deux couleurs différentes, couvrant respectivement une hauteur proportionnelle à la position de la girouette par rapport aux points cardinaux les plus proches auxquels les couleurs correspondent. Quant aux sources lumineuses **70** alignées sur le sol, elles sont éclairées elles aussi, les unes après les autres, jusqu'à correspondance avec la graduation de l'échelle de Beaufort correspondant à la vitesse du vent, ceci grâce à un sélecteur asservi à la vitesse de rotation de l'anémomètre.

Quel que soit le mode de réalisation, la paroi translucide interposée entre les tubes au néon et l'oeil des utilisateurs, permet à ces derniers d'avoir une impression de continuité des surfaces colorées par l'intermédiaire des tubes colorés éclairés malgré l'espacement relatif à ceux-ci.

En se rapportant à nouveau à la figure 3, on remarque que l'extrémité de l'empennage **61** de la girouette anémomètre **60** est équipée d'une source lumineuse colorée **62** matérialisant l'axe longitudinal XX de la girouette, permettant ainsi de connaître, de jour comme de nuit, une position géographique relative en combinaison avec les indications colorées de la direction du vent fournies par l'indicateur. On remarque aussi, sur cette même figure, que l'empennage **61** est muni de sphères lumineuses superposées **63, 64** et **65,** cerclées de tubes de néon circulaires, de couleur déterminée, correspondant chacune, à un niveau de pollution de l'air.

L'indicateur lumineux selon l'invention peut avoir toutes formes et tous aspects en vue de permettre notamment son intégration lumineuse dans des ensembles architecturaux, dans des sites urbains, ou dans du mobilier urbain, la structure du système ne se limitant pas à la composition d'un panneau ou d'une colonne lumineuse. A souligner que le mode de réalisation simplifié, tel qu'il est représenté à la figure 1, se prête parfaitement à un montage en façade d'un immeuble ou sur un panneau indicateur d'autoroute, au même titre que les dispositifs donnant actuellement l'heure et la température ambiante, voire en combinaison avec ceux-ci.

Dans l'hypothèse où le système lumineux serait placé en rase campagne, ou dans un endroit non équipé en réseau d'énergie électrique, celle-ci pourrait être d'origine éolienne ou photovoltaïque.

## Revendications

1. Procédé d'indication lumineuse à distance de la direction et de la vitesse du vent et du niveau de pollution de l'air, mettant en oeuvre une girouette, un anémomètre et des capteurs, le dit procédé consistant à :
a) diviser la rose des vents en quatre secteurs égaux correspondant chacun à un angle de 90', dont les bissectrices sont confondues respectivement avec les points cardinaux ' c'est-à-dire couvrant chacun, dans le sens horaire, les secteurs Nord-Ouest à Nord-Est, Nord-Est à Sud-Est, Sud-Est à Sud-Ouest et Sud-Ouest à Nord-Ouest,
b) affecter à chaque secteur délimité à l'étape précédente a) une couleur prédéterminée, choisie arbitrairement pour constituer un code de couleurs,
**caractérisé par les étapes suivantes :**
c) choisir des sources lumineuses colorées selon le code de couleurs défini à l'étape précédente b) en nombre égal par couleur,
d) juxtaposer les sources lumineuses colorées réunies à l'étape précédente c), en les alternant régulièrement, en respectant l'ordre défini à l'étape a),
e) relier individuellement chaque source lumineuse colorée à une alimentation électrique de spécification appropriée, avec interposition d'un sélecteur asservi au déplacement angulaire de la girouette, de façon que seules les sources lumineuses de même couleur correspondant aux secteurs définis à l'étape d), soient éclairées lorsque la girouette est orientée dans la direction de l'un des points cardinaux, mais ne soient éclairées que sur une partie (D1) seulement de la distance (D) couverte par la totalité des sources lumineuses colorées juxtaposées, lorsque la girouette forme un angle avec la direction du point cardinal concerné; l'indication lumineuse de la direction du vent étant alors précisée par l'éclairage de la partie restante (D2) de la distance couverte par les sources lumineuses de couleur correspondant à celle affectée au secteur du côté duquel la girouette est décalée angulairement par rapport au point cardinal considéré, la distance D2=D-D1 étant alors proportionnelle à la valeur de l'angle balayé par la girouette,
f) adjoindre, aux sources lumineuses colorées servant à indiquer la direction du vent, telles que définies ci-dessus, une série de sources lumineuses réparties selon l'échelle de Beaufort, de façon que chaque source lumineuse corresponde à une graduation de l'échelle de Beaufort,
g) relier individuellement les sources lumineuses destinées à indiquer la force du vent, telles que définies à l'étape f) ci-dessus, à une alimentation électrique de spécification appropriée, avec interposition d'un sélecteur asservi à la vitesse de rotation de l'anémomètre, n'assurant l'éclairage que des sources lumineuses correspondant aux graduations de l'échelle de Beaufort couvertes par la force du vent,
h) utiliser des sources lumineuses colorées, activées séparément selon le niveau de pollution mesuré par des capteurs dédiés, en affeçtant une couleur distincte à chaque niveau de pollution.

2. Procédé selon la revendication 1, **caractérisé en ce que** le code de couleurs permettant de visualiser la direction du vent est le suivant :
Nord : Bleu
Est : Jaune
Sud : Vert
Ouest : Rouge.

3. Procédé selon la revendication 1, **caractérisé en ce que** les couleurs correspondant à chaque niveau de pollution sont, dans l'ordre croissant des niveaux, le vert, l'orange et le rouge.

4. Indicateur lumineux de la direction et de la vitesse du vent et de la pollution de l'air, comportant, d'une part, une girouette, un anénomètre et des capteurs, et, d'autre part, des indicateurs lumineux colorés de la direction du vent, pour la mise en oeuvre du procédé selon l'une quelonque des revendications 1 à 3, **caractérisé en ce que** les indicateurs lumineux colorés de la direction du vent sont constitués de tubes luminescents de quatre couleurs différentes (21, 22, 23, 24), correspondant chacune à un secteur particulier de la rose des vents, juxtaposés et alternés régulièrement pour couvrir une surface suffisante à l'interprétation à distance de la direction du vent, la dimension mesurée dans un plan perpendiculaire aux dits tubes correspond à la distance D, déterminée à l'étape e) du procédé ; **en ce que** la mise sous tension unitaire et collective des tubes luminescents colorés indiquant la direction du vent est obtenue par l'intermédiaire d'un sélecteur (**40**) asservi au déplacement angulaire de la girouette (**60**), **en ce que** la mise sous tension unitaire et collective des sources lumineuses, représentant les graduations de l'échelle de Beaufort, est obtenue par l'intermédiaire d'un sélecteur asservi à l'anémomètre, et **en ce qu'**il comprend des sources lumineuses colorées, utilisées pour indiquer le niveau de pollution de l'air, et qui sont constituées de sphères lumineuses de couleur bleue, cerclées de tubes de néon circulaires, de couleur verte, orange ou rouge.

5. Indicateur lumineux selon la revendication 4, **caractérisé en ce que** les tubes luminescents sont disposés derrière une paroi translucide (**52**).

6. Indicateur lumineux selon la revendication 4, **caractérisé en ce que** le sélecteur (**40**) assurant la mise sous tension sélective des tubes luminescents est constitué d'une couronne isolante (**41**), à la périphérie de laquelle sont fixés, à espace régulier, des plots conducteurs (**42**), dont le nombre correspond à celui de la totalité des tubes luminescents et auxquels sont reliés individuellement l'une des bornes des tubes luminescents, en regroupant ceux ayant la même couleur dans le même secteur, en respectant leur ordre sur l'indicateur et le code de couleurs, sur lesquels plots repose un patin conducteur (**43**) asservi au déplacement de la girouette (**60**) et couvrant un angle de 90°, disposé symétriquement par rapport au plan de symétrie de la girouette et sur l'avant de celle-ci, relié à l'une des bornes de l'alimentation électrique, alors que l'autre borne est reliée directement et collectivement à la seconde borne de mise sous tension des tubes luminescents.

7. Indicateur lumineux selon l'une quelconque des revendications 4 à 6, **caractérisé en ce que** les tubes luminescents sont des tubes au néon colorés **(51)** circulaires et fixés autour d'un mât **(50)** derrière une paroi translucide cylindrique **(52),** le dit mât **(50)** supportant une girouette-anémomètre **(60),** et des sources lumineuses **(70)** indiquant la vitesse du vent étant alignées radialement, à la base de l'ensemble.

8. Indicateur selon l'une quelconque des revendications 4 à 6, **caractérisé en ce que** l'extrémité de l'empennage (**61**) de la girouette (**60**) comporte une source lumineuse (**62**) visualisant l'axe longitudinal (XX) de la dite girouette (**60**) et permettant de situer, en combinaison avec les indications colorées de la direction du vent, la situation géographique d'un point par rapport à la girouette.

9. Indicateur lumineux selon la revendication 4, **caractérisé en ce que** les sphères lumineuses (**63-65**) indiquant le niveau de pollution sont incrustées dans l'empennage **(61)** de la girouette (**60**), avec cerclage de part et d'autre de celui-ci par un tube de néon circulaire, de diamètre et de couleur appropriés, correspondant à un niveau de pollution déterminé.

## Patentansprüche

1. Verfahren zur Leuchtanzeige der Windrichtung und der Windgeschwindigkeit und des Luftverschmutzungsgrads in der Ferne, das einen Windrichtungsanzeiger, einen Windgeschwindigkeitsmesser und Sensoren verwendet, wobei das Verfahren darin besteht:
a) die Windrose in vier gleiche Sektoren aufzuteilen, die jeweils einem Winkel von 90° entsprechen, deren Winkelhalbierende jeweils mit den Haupthimmelsrichtungspunkten zusammenfallen, d.h. die jeweils in Uhrzeigerrichtung die Sektoren Nord-West bis Nord-Ost, Nord-Ost bis Süd-Ost, Süd-Ost bis Süd-West und Süd-West bis Nord-West abdecken,
b) jedem im vorhergehenden Schritt a) abgegrenzten Sektor eine vorbestimmte Farbe zuzuteilen, die willkürlich gewählt wird, um einen Farbcode zu bilden,
**gekennzeichnet durch** die folgenden Schritte:
c) Auswahl farbiger Lichtquellen nach dem im vorhergehenden Schritt b) definierten Farbcode in pro Farbe gleicher Anzahl,
d) Anordnung der im vorhergehenden Schritt c) zusammengestellten, farbigen Lichtquellen nebeneinander, indem sie unter Berücksichtigung der im Schritt a) definierten Reihenfolge regelmäßig abwechselnd angeordnet werden,
e) einzelne Verbindung jeder farbigen Lichtquelle mit einer Stromversorgung geeigneter Spezifizierung, mit Zwischenschaltung einer Wählvorrichtung, die von der Winkelverschiebung des Windrichtungsanzeigers abhängig ist, so daß nur die Lichtquellen gleicher Farbe entsprechend den im Schritt d) definierten Sektoren aufleuchten, wenn der Windrichtungsanzeiger in Richtung eines der Haupthimmelsrichtungspunkte ausgerichtet ist, daß sie aber nur über einen Teil (D1) der von der Gesamtheit der nebeneinander angeordneten, farbigen Lichtquellen überdeckten Distanz (D) leuchten, wenn der Windrichtungsanzeiger einen Winkel mit der Richtung des enstprechenden Haupthimmelsrichtungspunkts bildet, wobei die Leuchtanzeige der Windrichtung dann von der Beleuchtung des verbleibenden Teils (D2) der von den Lichtquellen überdeckten Distanz präzisiert wird, deren Farbe derjenigen entspricht, die dem Sektor zugeordnet ist, zu dessen Seite der Windrichtungsanzeiger winkelmäßig in bezug auf den betrachteten Haupthimmelsrichtungspunkt verschoben ist, wobei die Distanz D2=D-D1 dann proportional zum Wert des vom Windrichtungsanzeiger überstrichenen Winkels ist,
f) Zuordnung einer Reihe von Lichtquellen zu den wie oben definierten, farbigen Lichtquellen, die zur Anzeige der Windrichtung dienen, wobei erstere Lichtquellen gemäß der Beaufort-Skala verteilt sind, so daß jede Lichtquelle einer Abstufung der Beaufort-Skala entspricht;
g) einzelne Verbindung der Lichtquellen, die zur Anzeige der Windstärke bestimmt sind, wie sie im obigen Schritt f) definiert wurden, mit einer Stromversorgung geeigneter Spezifizierung, mit Zwischenschaltung einer Wählvorrichtung, die von der Drehgeschwindigkeit des Windgeschwindigkeitsmessers abhängig ist, wobei nur das Aufleuchten der Lichtquellen gewährleistet wird, die den Abstufungen der Beaufort-Skala entsprechen, die von der Windstärke abgedeckt werden,
h) Verwendung farbiger Lichtquellen, die je nach Verschmutzungsgrad getrennt aktiviert werden, der von zugeordneten Sensoren gemessen wird, indem jedem vorbestimmten Verschmutzungsgrad eine eigene Farbe zugeteilt wird.

2. Verfahren nach Anspruch 1, **dadurch gekennzeichnet, daß** der Farbcode, der die Anzeige der Windrichtung ermöglicht, der folgende ist:
Norden: Blau
Osten: Gelb
Süden: Grün
Westen: Rot.

3. Verfahren nach Anspruch 1, **dadurch gekennzeichnet, daß** die jedem Verschmutzungsgrad entsprechenden Farben in der ansteigenden Reihenfolge der Grade Grün, Orange und Rot angeordnet sind.

4. Leuchtanzeige der Richtung und der Geschwindigkeit des Winds und der Luftverschmutzung, die einerseits einen Windrichtungsanzeiger, einen Windgeschwindigkeitsmesser und Sensoren und andererseits farbige Leuchtanzeigen für die Windrichtung aufweist, zur Anwendung des Verfahrens nach einem der Ansprüche 1 bis 3, **dadurch gekennzeichnet, daß** die farbigen Leuchtanzeigen der Windrichtung aus Leuchtröhren (21, 22, 23, 24) in vier verschiedenen Farben bestehen, die jeweils einem bestimmten Sektor der Windrose entsprechen und nebeneinander und regelmäßig abwechselnd angeordnet sind, um eine Fläche zu überdecken, die ausreicht, um in der Ferne die Windrichtung interpretieren zu können, wobei die in einer Ebene senkrecht zu den Röhren gemessene Abmessung der Distanz D entspricht, die im Schritt e) des Verfahrens bestimmt wird; daß das einzelne oder gemeinsame Unterspannungsetzen der die Windrichtung anzeigenden, farbigen Leuchtröhren mittels einer Wählvorrichtung (40) erhalten wird, die von der Winkelverschiebung des Windrichtungsanzeigers (60) abhängig ist, daß das einzelne und gemeinsame Unterspannungsetzen der Lichtquellen, die die Abstufungen der Beaufort-Skala darstellen, mittels einer vom Windgeschwindigkeitsmesser abhängigen Wählvorrichtung erhalten wird, und daß sie farbige Lichtquellen aufweist, die zur Anzeige des Luftverschmutzungsgrads verwendet werden und die aus Leuchtkugeln blauer Farbe bestehen, die von kreisförmigen Neonröhren grüner, oranger oder roter Farbe umgeben sind.

5. Leuchtanzeige nach Anspruch 4, **dadurch gekennzeichnet, daß** die Leuchtröhren hinter einer durchsichtigen Wand (52) angeordnet sind.

6. Leuchtanzeige nach Anspruch 4, **dadurch gekennzeichnet, daß** die Wählvorrichtung (40), die das wahlweise Unterspannungsetzen der Leuchtröhren gewährleistet, aus einem isolierenden Ring (41) besteht, an dessen Umfang in regelmäßigem Abständen leitende Kontaktplättchen (42) befestigt sind, deren Anzahl derjenigen der Gesamtheit der Leuchtröhren entspricht und mit denen die Klemmen der Leuchtröhren jeweils einzeln verbunden sind, indem diejenigen mit der gleichen Farbe im gleichen Sektor zusammengefaßt werden, unter Berücksichtigung ihrer Reihenfolge auf der Anzeige und des Farbcodes, wobei auf den Kontaktplättchen ein leitender Gleitschuh (43) aufliegt, der von der Verschiebung des Windrichtungsanzeigers (60) abhängig ist und einen Winkel von 90° abdeckt, symmetrisch in bezug auf die Symmetrieebene des Windrichtungsanzeigers und an dessen Vorderseite angeordnet und mit einer der Klemmen der Stromversorgung verbunden ist, während die andere Klemme direkt und kollektiv mit der zweiten Klemme zum Unterspannungsetzen der Leuchtröhren verbunden ist.

7. Leuchtanzeige nach einem der Ansprüche 4 bis 6, **dadurch gekennzeichnet, daß** die Leuchtröhren kreisförmige, farbige Neonröhren (51) und um einen Mast (50) hinter einer zylindrischen, durchsichtigen Wand (52) angeordnet sind, wobei der Mast (50) einen Windrichtungsanzeiger-Windgeschwindigkeitsmesser (60) trägt, und Lichtquellen (70), die die Geschwindigkeit des Winds anzeigen, radial an der Basis der Einheit fluchtend angeordnet sind.

8. Leuchtanzeige nach einem der Ansprüche 4 bis 6, **dadurch gekennzeichnet, daß** das Ende der Flosse (61) des Windrichtungsanzeigers (60) eine Lichtquelle (62) aufweist, die die Längsachse (XX) des Windrichtungsanzeigers (60) anzeigt und es ermöglicht, in Kombination mit den Farbanzeigen der Windrichtung, die geographische Lage eines Punkts in bezug auf den Windrichtungsanzeiger zu orten.

9. Leuchtanzeige nach Anspruch 4, **dadurch gekennzeichnet, daß** die Leuchtkugeln (63-65), die den Verschmutzungsgrad anzeigen, in die Flosse (61) des Windrichtungsanzeigers (60) eingedrückt sind, wobei sie zu beiden Seiten der Flosse von einer kreisförmigen Neonröhre mit geeignetem Durchmesser und geeigneter Farbe umgeben sind, die einem bestimmten Verschmutzungsgrad entspricht.

## Claims

1. Method of using light to indicate at a distance the wind direction and wind velocity and the air pollution level, which makes use of a weather vane, an anemometer and sensors, said method consisting in:
a) dividing the compass dial into four equal sectors each corresponding to an angle of 90°, the bisecting lines of which coincide respectively with the cardinal points, that is to say the sectors cover respectively, in the clockwise direction, the sectors north west to north east, north east to south east, south east to south west and south west to north west,
b) assigning to each sector delimited in the preceding stage a) a predetermined colour, chosen arbitrarily to form a colour code,
**characterized by the following stages :**
c) choosing light sources coloured according to the colour code defined in the preceding stage b) in an equal number for each colour,
d) juxtaposing the coloured light sources brought together in the preceding stage c), alternating them regularly and respecting the order defined in stage a),
e) individually connecting each coloured light source to an electricity supply of appropriate specification, interposing a selector controlled by the angular displacement of the weather vane in such a manner that only the light sources of the same colour corresponding to the sectors defined in stage d) are illuminated when the weather vane is orientated in the direction of one of the cardinal points, but are illuminated over only a part (D1) of the distance (D) covered by all the juxtaposed coloured light sources, when the weather vane forms an angle with the direction of the cardinal point in question, the light indication of the wind direction then being specified by the illumination of the remaining part (D2) of the distance covered by the light sources of the colour corresponding to that assigned to the sector in the direction of which the weather vane is angularly offset in relation to the cardinal point in question, the distance D2=D-D1 then being proportional to the value of the angle swept by the weather vane,
f) associating with the coloured light sources which serve to indicate the wind direction, as defined above, a series of light sources distributed according to the Beaufort scale, in such a manner that each light source corresponds to one graduation of the Beaufort scale,
g) individually connecting the light sources intended to indicate the wind force, as defined in stage f) above, to an electricity supply of appropriate specification, interposing a selector controlled by the speed of rotation of the anemometer, effecting the illumination of only those light sources corresponding to the graduations of the Beaufort scale which are covered by the wind force,
h) utilizing coloured light sources which are actuated separately according to the pollution level measured by dedicated sensors, assigning a separate colour to each pollution level.

2. Method according to Claim 1, **characterized in that** the colour code which makes it possible to display the wind direction is as follows:
north : blue
east : yellow
south : green
west : red.

3. Method according to Claim 1, **characterized in that** the colours corresponding to each pollution level are, in increasing level order, green, orange and red.

4. Indicator light indicating the wind direction and wind velocity and the air pollution, including, on one hand, a weather vane, an anemometer and sensors, and, on the other hand, indicator lights colored according to the wind direction, for implementing the method according to anyone of Claims 1 to 3, **characterized in that** the coloured indicator lights indicating the wind direction are constituted by luminescent tubes of four different colours (21, 22, 23, 24), each corresponding to a particular sector of the compass dial, which tubes are juxtaposed and alternated regularly so as to cover a surface area which is adequate for interpretation of the wind direction at a distance, and the dimension measured in a plane perpendicular to said tubes corresponds to the distance D determined in stage e) of the method, **in that** the individual and collective application of voltage to the coloured luminescent tubes indicating the wind direction is achieved by means of a selector (40) controlled by the angular displacement of a weather vane (60), **in that** the individual and collective application of voltage to the light sources representing the graduations of the Beaufort scale is achieved by means of a selector controlled by the anemometer, and **in that** it includes coloured light sources utilized to indicate the air pollution level and which are constituted by light spheres of a blue colour encircled by circular neon tubes of green, orange or red colour.

5. Indicator light according to Claim 4, **characterized in that** the luminescent tubes are arranged behind a translucent wall (52).

6. Indicator light according to Claim 4, **characterized in that** the selector (40), which effects the selective application of voltage to the luminescent tubes, is constituted by an insulating ring (41), on the perimeter of which are fixed, with regular spacing, conductor studs (42), the number of which corresponds to the total number of the luminescent tubes and to each of which one of the terminals of the luminescent tubes is connected, those having the same colour being grouped together in the same sector, respecting their order on the indicator and the colour code, resting on which studs is a conductor shoe (43) controlled by the displacement of the weather vane (60) and covering an angle of 90°, which shoe is arranged symmetrically in relation to the plane of symmetry of the weather vane and forward of the latter and is connected to one of the terminals of the electricity supply while the other terminal is connected directly and collectively to the second terminal for application of voltage to the luminescent tubes.

7. Indicator light according to any one of Claims 4 to 6, **characterized in that** the luminescent tubes are coloured neon tubes (51) which are circular and fixed around a mast (50) behind a translucent cylindrical wall (52), said mast (50) supporting a speed and direction anemometer (60), and light sources (70) indicating the wind velocity being aligned radially, at the base of the unit.

8. Indicator according to any one of Claims 4 to 6, **characterized in that** the end of the tail (61) of the weather vane (60) comprises a light source (62) displaying the longitudinal axis (XX) of said weather vane (60) and making it possible to locate, in conjunction with the coloured indications of the wind direction, the geographical situation of a point in relation to the weather vane.

9. Indicator light according to Claim 4, **characterized in that** the light spheres (63-65) indicating the pollution level are embedded in the tail (61) of the weather vane (60) and encircled on both sides of the latter by a circular neon tube, of appropriate diameter and colour, corresponding to a given pollution level.
